# EUROPÄISCHE PATENTSCHRIFT

(11) **EP 2 920 105 B1**
(45) Veröffentlichungstag und Bekanntmachung des Hinweises auf die Patenterteilung: **27.12.2017**
(21) Anmeldenummer: 13786454.2
(22) Anmeldetag: 30.10.2013
(51) Int. Cl.: B66F 9/075, B66F 9/22, B62D 5/12, B62D 7/08

(54) **LENKSYSTEM FÜR EIN FLURFÖRDERZEUG**
STEERING SYSTEM FOR AN INDUSTRIAL TRUCK
SYSTÈME DE DIRECTION POUR UN CHARIOT DE MANUTENTION

(30) Priorität: 15.11.2012 DE 102012110988
(43) Veröffentlichungstag der Anmeldung: 23.09.2015
(73) Patentinhaber: Hubtex Maschinenbau GmbH & Co. KG, 36041 Fulda (DE)
(72) Erfinder: KELLER, Jürgen, 36137 Großenlüder (DE)
(74) Vertreter: Kluin, Jörg-Eden
(86) Internationale Anmeldenummer: PCT/EP2013/072694
(87) Internationale Veröffentlichungsnummer: WO 2014/075921

(56) Entgegenhaltungen:
- EP-A2- 1 547 905
- WO-A1-01/12493
- DE-A1- 4 025 543
- GB-A- 899 439
- JP-A- 2001 063 984
- JP-A- 2004 231 111
- JP-A- 2006 160 151
- US-A- 6 070 691
- US-A1- 2007 289 798
- Brendan Casey, Tumarkin Marian: "Actuator Synchronization", 12 December 2006 (2006-12-12), HydraulicSupermarket.com, Australia

## Beschreibung

Die Erfindung betrifft ein Lenksystem für ein Flurförderzeugs, bei dem mindestens zwei hydraulisch lenkbare Radsätze vorgesehen sind. Ein derartiges Lenksystem ist beispielsweise aus der DE 10 2010 016 470 B4 bereits bekannt. Nachteilig bei diesem Lenksystem, bei welchem der Antrieb der Lenkung mittels Ketten erfolgt, ist, dass die Montage und die Wartung der Ketten schwierig sind. Beispielsweise müssen die Ketten (nach-)gespannt werden etc. Zudem können sich Regelschwierigkeiten ergeben, wenn beispielsweise im Stand gelenkt wird, durch Schwingungen, die sich durch Gummirückstellkräfte des Rades auf dem Untergrund ergeben können. Die elektronische Kopplung zwischen den Rädern ist zudem aufwendig.

Aus der WO 01/12493 A1 ist ein Lenksystem bekannt, bei dem drei mittels hydraulischer Differentialzylinder lenkbare Radsätze vorgesehen sind. Zwei der Zylinder sind miteinander wirkverbunden.

Die JP 2006 160 151 zeigt die Anlenkung zweier Räder mittels Differentialzylinder.

Die JP 2004 231 111 A zeigt die Anienkung von Rädern mittels Lenkhebel.

Aus der GB 899,439 A ist ein Gabelstapler bekannt, mit einem Rad in zwei hydraulisch biockierbare Positionen gebracht werden kann, die rechtwinklig zueinander sind. Dies erfolgt mittels eines doppeltwirkenden Differentialzylinders.

Die JP 2001 063 984 A zeigt die Anlenkung von Rädern mittels gekrümmter Lenkhebel.

Die EP 1 547 905 A2 offenbart ein Industriefahrzeug mit einem Lenksystem mit miteinander verbundenen Hydraulikzylindern, bei dem ein Zylinder zwei Radsätze steuert.

Aus der US 2007/0289798 A1 ist ein Flurförderzeug bekannt, bei welchem die Lenkung dadurch erfolgt, dass ein hydraulischer Zylinder entweder mit seinen Kolbenstangen oder mit seinem Zylinder an einem Zugmittel befestigt ist.

Die DE 40 25 543 A1 offenbart ein Flurförderzeug, bei dem ein Gleichlaufzylinder mit seinen beiden Kolbenstangenenden jeweils einen Drehschemel betätigt.

Die US 6,070,691 zeigt ein Steuerungssystem für ein Fahrzeug mit zwei lenkbaren Rädern, die jeweils mittels eines schwenkbar gelagerten Gleichlaufzylinders lenkbar sind.

Aus dem Beitrag Brendan Casey, Tumarkin Marian: "Actuator Synchronization", 12. Dezember 2006 (2006-12-12), HydraulicSupermarket.com Australia ist die parallele Anordnung von zwei miteinander verbundenen Gleichlaufzylindern offenbart.

Die Erfindung hat es sich zur Aufgabe gemacht, ein Lenksystem zu schaffen, welches zumindest hinsichtlich eines der genannten Nachteile verbessert ist.

Diese Aufgabe wird durch das in Anspruch 1 wiedergegebene Lenksystem gelöst.

Bei dem erfindungsgemäßen Lenksystem für ein Flurförderzeug sind mindestens zwei hydraulisch lenkbare Radsätze vorgesehen. Jeder Radsatz umfasst bevorzugt mindestens ein drehbar gelagertes Rad. Die Radsätze sind jeweils mittels eines hydraulischen Linearmotors lenkbar, der als Gleichlaufzylinder ausgebildet ist. (Diese Linearmotoren können auch als Lenkmotoren bezeichnet werden.) Die mindestens zwei Gleichlaufzylinder sind miteinander wirkverbunden.

Hierdurch ist eine vorteilhafte hydraulische Kopplung zwischen den mindestens zwei hydraulisch lenkbaren Radsätzen geschaffen. Die Verwendung von Gleichlaufzylindern anstelle von Differentialzylindern vermeidet zudem Schwierigkeiten, die sich bei Differentialzylindern ergeben, aufgrund der dort nur auf einer Seite des Kolbens ansetzenden Kolbenstange und hierdurch resultierenden unterschiedlich großen Kolbenflächen.

Jeder der mindestens zwei Gleichlaufzylinder weist genau eine aktive Kolbenstange auf, die der Übertragung der translatorischen Bewegung des Kolbens dient. Die zur Erzielung des Gleichlaufs vorgesehene weitere Kolbenstange der Gleichlaufzylinder ist mit ihrem freien Ende nicht angeschlossen und dient daher nicht der Übertragung einer translatorischen Bewegung.

Mit Vorteil sind die mindestens zwei Gleichlaufzylinder in einem gemeinsamen Hydraulikkreislauf angeordnet, der bevorzugt geschlossenen ist.

Der Kolben jedes Hydraulikzylinders unterteilt das Innere des Zylinders in eine der aktiven Kolbenstange zugewandte Kammer und eine der aktiven Kolbenstange abgewandte Kammer. Bei einem Einströmen von Hydraulikflüssigkeit in die der aktiven Kolbenstange zugewandte Kammer fährt die aktive Kolbenstange ein. Diese Kammer wird im Folgenden daher als Zugkammer bezeichnet. Bei einem Einströmen von Hydraulikflüssigkeit in die der aktiven Kolbenstange abgewandte Kammer fährt die aktive Kolbenstange aus, diese Kammer wird im Folgenden daher als Druckkammer bezeichnet.

Bevorzugt ist der Hydraulikkreislauf derart ausgestaltet, dass die Zugkammer eines Gleichlaufzylinders mit der Druckkammer eines anderen Gleichlaufzylinders verbunden ist. Bevorzugt ist weiter die Druckkammer des Gleichlaufzylinders, dessen Zugkammer mit der Druckkammer eines anderen Gleichlaufzylinders verbunden ist, mit einem Hydraulikventil verbunden. Die Zugkammer des Zylinders, dessen Druckkammer mit der Zugkammer eines anderen Zylinders verbunden ist, ist bevorzugt ebenfalls mit einem Hydraulikventil, bevorzugt mit demselben Hydraulikventil, verbunden. Hierdurch wird erreicht, dass die aktiven Kolbenstangen der mindestens zwei Gleichlaufzylinder gleichartige Bewegungen ausführen. Fährt beispielsweise die aktive Kolbenstange eines Gleichlaufzylinders aus, dann fährt auch die aktive Kolbenstange des mindestens einen weiteren Gleichlaufzylinders aus.

In einer Ausführungsform mit genau zwei Gleichlaufzylindern ist also die Zugkammer des einen Gleichlaufzylinders bevorzugt mit der Druckkammer des anderen Gleichlaufzylinders verbunden und die beiden übrigen Kammern der Zylinder bevorzugt mit dem Hydraulikventil.

Bevorzugt sind die beiden Gleichlaufzylinder parallel zueinander angeordnet und die aktiven Kolbenstangen der beiden Gleichlaufzylinder weisen in die gleiche Richtung. Die beiden aktiven Kolbenstangen führen dann stets parallele, synchrone Bewegungen aus.

Jeder Radsatz umfasst zudem zum Zwecke der Lenkbarkeit des mindestens einen Rades eine drehbar gelagerte Vorrichtung, in der dieses Rad drehbar gelagert ist. Diese Vorrichtung kann beispielsweise gabelförmig sein. Bevorzugt umfasst diese Vorrichtung einen Radschemel oder wird durch einen Radschemel gebildet.

Zur Umwandlung der translatorischen Bewegung des hydraulischen Linearmotors in eine Rotationsbewegung der drehbar gelagerten Vorrichtung wirkt die aktive Kolbenstange der Gleichlaufzylinder bevorzugt an einem Punkt an der drehbar gelagerten Vorrichtung, der zu der Drehachse der drehbar gelagerten Vorrichtung (Lenkachse) versetzt ist. Hierdurch wird der erforderliche Hebel zur Schaffung eines Drehmoments bereitgestellt. In der bevorzugten Ausführungsform wirkt die aktive Kolbenstange des einen Gleichlaufzylinders an einem Punkt an der zugehörigen drehbar gelagerten Vorrichtung des zugehörigen Radsatzes, der zu einer anderen Seite von der Drehachse der drehbar gelagerten Vorrichtung versetzt ist, als der entsprechende Punkt der aktiven Kolbenstange des mindestens einen anderen Gleichlaufzylinders bezüglich der Drehachse der dortigen drehbar gelagerten Vorrichtung. Auf diese Weise wird erreicht, dass trotz paralleler, synchroner Bewegung der aktiven Kolbenstangen der beiden Gleichlaufzylinder stets eine gegensinnige Rotation und damit Lenkung der beiden Radsätze erfolgt.

Die aktive Kolbenstange der Gleichlaufzylinder wirkt jeweils über einen Lenkhebel auf die zugehörige drehbar gelagerte Vorrichtung des Radsatzes. Der Lenkhebel ist jeweils drehbar an der zugehörigen aktiven Kolbenstange und drehbar an der zugehörigen drehbar gelagerten Vorrichtung angeordnet. Besonders bevorzugt ist der Lenkhebel mit einem Ende drehbar an der aktiven Kolbenstange gelagert und mit dem gegenüberliegenden Ende an der drehbar gelagerten Vorrichtung.

Durch den Lenkhebel werden mehrere Vorteile erreicht. Zum einen ist eine Voraussetzung dafür geschaffen, dass erfindungsgemäß der Gleichlaufzylinder selbst, genauer gesagt sein Gehäuse, ortsfest zum Fahrgestell des Flurförderzeugs angeordnet ist. Der Zylinder muss sich nicht mit der Lenkbewegung mitbewegen. Dies kann unter anderem den Vorteil haben, dass die die Gleichlaufzylinder versorgenden Hydraulikleitungen, wie bevorzugt, starr ausgeführt sein können. Auch bestehen bei dem Lenkhebel größere Freiheiten bezüglich der Formgebung, als bei der aktiven Kolbenstange, so dass dessen Form hinsichtlich etwa des erzielbaren Lenkwinkels optimiert sein kann.

Wenn der Lenkhebel gekrümmt ist, kann ein größerer Lenkwinkel erreichbar sein, als bei einem geraden Lenkhebel.

Die drehbar gelagerten Vorrichtungen weisen bevorzugt jeweils eine Aussparung auf, in die die Lenkhebel - besonders bevorzugt nur in bestimmten Lenksituationen - treten.

Durch die Wirkverbindung der beiden Gleichlaufzylinder sind die beiden Radsätze hydraulisch miteinander gekoppelt. Vorzugsweise ist daher keine elektronische Kopplung zwischen den drehbar gelagerten Vorrichtungen der hydraulisch gekoppelten Radsätze vorgesehen.

Bevorzugt weist das Lenksystem einen Lenkgeber, insbesondere ein Lenkrad auf. Weiter bevorzugt ist ein Lenkorbitrol vorgesehen, mit welchem der Lenkgeber - bevorzugt mechanisch - verbunden ist.

Die Erfindung erstreckt sich auch auf ein Flurförderzeug mit einem zuvor beschriebenen Lenksystem.

Die Erfindung soll nun am Beispiel zweier Ausführungsbeispiele erläutert werden. Es zeigen:
- Fig. 1: eine Ansicht von oben auf einen Teil eines Flurförderzeugs gemäß einer ersten Ausführungsform;
- Fig. 2: einen Ausschnitt des Flurförderzeugs von Fig. 1 in sechs verschiedenen Lenkpositionen;
- Fig. 3: eine perspektivische Darstellung eines Teils des Flurförderzeugs gemäß der ersten Ausführungsform;
- Fig. 4: eine Detaildarstellung von Fig. 3;
- Fig. 5 -: schematisch - ein Blockdiagramm eines erfindungsgemäßen Lenksys-tems eines zweiten Ausführungsbeispiels am Beispiel eines drei Radsätze aufweisenden Flurförderzeugs in Längsfahrt;
- Fig. 6: dasselbe Blockdiagramm des Lenksystems wie in Fig. 5, am Beispiel desselben Flurförderzeugs in Querfahrt.

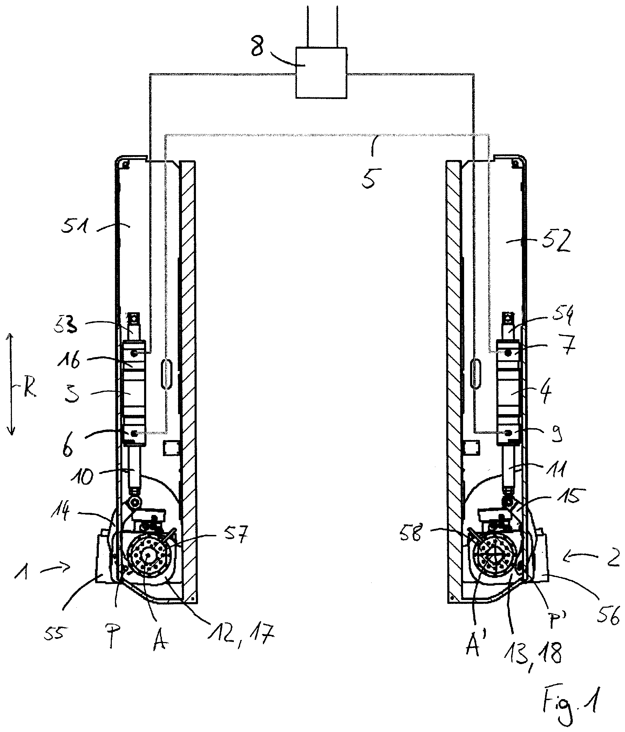

Fig. 1 zeigt einen Ausschnitt eines Flurförderzeugs gemäß eines ersten Ausführungsbeispiels mit einem ersten Ausführungsbeispiel eines erfindungsgemäßen Lenksystems. Es sind zwei parallel und beabstandet zueinander verlaufende Segmente 51, 52 des Fahrgestells erkennbar. Diese können an ihren oberen Enden durch einen in den Zeichnungen nicht dargestellten Querbalken verbunden sein. An den in Fig. 1 unteren Enden der Segmente 51, 52 ist jeweils ein Radsatz 1, 2 angeordnet.

Im gezeigten Ausführungsbeispiel umfasst ein Radsatz jeweils genau ein Rad. Es ist denkbar, dass ein Radsatz mehrere Räder umfasst, dass beispielsweise Zwillingsräder vorgesehen sind. Das Flurförderzeug weist mindestens einen in Fig. 1 nicht gezeigten weiteren Radsatz auf. Es kann sich beispielsweise um ein dreirädriges oder vierrädriges Fahrzeug handeln. Es sind zwei parallel zueinander angeordnete hydraulische Linearmotoren gezeigt, die als Gleichlaufzylinder 3, 4 ausgebildet sind. Die Gleichlaufzylinder sind in Richtung R der Längserstreckung der Segmente 51, 52 in diesen angeordnet. Sie verlaufen also nicht schräg in den Segmenten 51, 52. Jeder Gleichlaufzylinder 3, 4 weist eine aktive Kolbenstange 10, 11 auf. Zur Erzielung des Gleichlaufs weist jeder Gleichlaufzylinder zudem eine passive Kolbenstange 53, 54 auf, deren Ende frei ist und die nicht der Übertragung einer translatorischen Bewegung dient. Zur Erzielung der Lenkbarkeit des Rades 55, 56 weist jeder Radsatz 1, 2 eine drehbar gelagerte Vorrichtung 12, 13 auf. Diese ist als Radschemel 17, 18 ausgebildet und mittels eines Lenklagers 57, 58 um eine Lenkachse A, A' drehbar gelagert. Die Lenkachse A, A' steht vorzugsweise senkrecht. Zur Umwandlung der durch die Gleichlaufzylinder bereitgestellten translatorischen Bewegung in die rotatorische Lenkbewegung wirkt die aktive Kolbenstange 10, 11 des Gleichlaufzylinders 3, 4 jeweils an einem Punkt P, P' an dem Radschemel 17, 18, der versetzt zur Drehachse A, A' angeordnet ist.

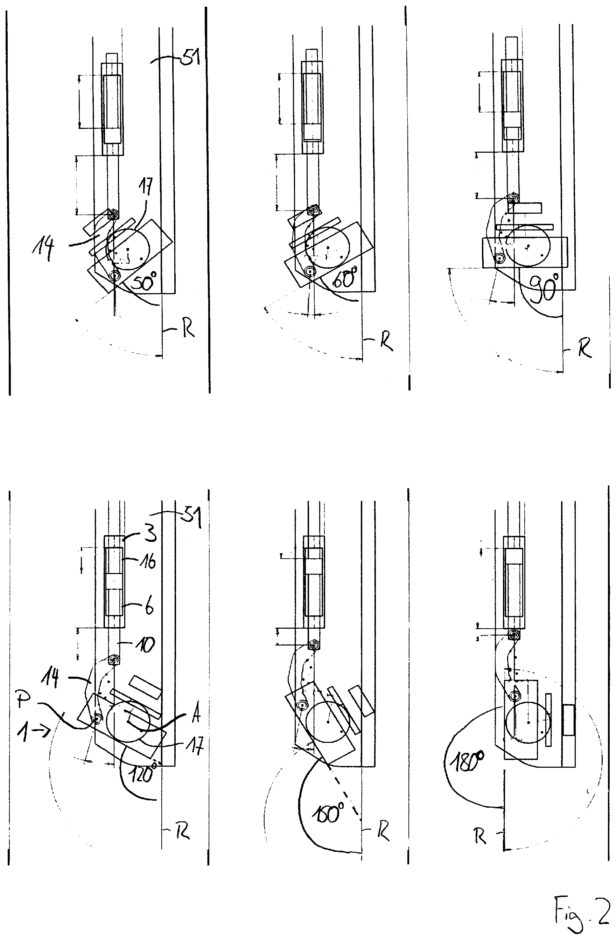

Die aktive Kolbenstange 10, 11 jedes Gleichlaufzylinders ist hierbei nicht direkt mit dem Radschemel verbunden, sondern mittels eines Lenkhebels 14, 15. Die Anbindung der Gleichlaufzylinder an die Radschemel erfolgt also über Lenkhebel. Der Lenkhebel 14, 15 ist gekrümmt. Wie insbesondere die linke und die mittlere obere Darstellung in Fig. 2 zeigen, wird hierdurch ein größerer Lenkwinkel erzielt, da der Lenkhebel 14, 15 dem in Fig. 2 als Kreis dargestelltem Radschemel 17, 18 ausweichen kann. Die beiden Lenkhebel 14, 15 sind spiegelsymmetrisch zueinander ausgeführt und angeordnet. Die jeweilige aktive Kolbenstange 10, 11 ist an dem jeweiligen Lenkhebel 14, 15, der jeweilige Lenkhebel 14, 15 an dem jeweiligen Radschemel 17, 18 jeweils um eine zur Drehachse A bzw. A' parallele Achse schwenkbar verbunden.

Die beiden Gleichlaufzylinder 3, 4 sind miteinander wirkverbunden, und zwar indem sie in einem gemeinsamen Hydraulikkreislauf angeordnet sind, der im gezeigten Ausführungsbeispiel geschlossen ist.

Fig. 1 zeigt, dass die Zugkammer 6 des linken Gleichlaufzylinders 3 mit der Druckkammer 7 des in Fig. 1 rechts dargestellten Gleichlaufzylinders 4 durch eine Hydraulikleitung verbunden ist. Sie zeigt auch, dass die Druckkammer 16 des links dargestellten Gleichlaufzylinders 3 mit einem Hydraulikventil 8 verbunden ist. Auch die Zugkammer 9 des rechts dargestellten Gleichlaufzylinders 4 ist mit diesem Hydraulikventil 8 verbunden. Das Hydraulikventil 8 kann auch als Lenkeinheit oder Lenkventil bezeichnet werden.

Das Hydraulikventil 8 kann in Abhängigkeit der Stellung eines Lenkgebers, beispielsweise der Drehstellung eines in den Fig. 1 bis 4 nicht gezeigten Lenkrades, die in Fig. 1 rechts und links von ihm abgehenden Hydraulikleitungen mit dem Rücklauf- bzw. Druckanschluss einer nicht gezeigten Hydraulikpumpe verbinden. Beispielsweise kann die in Fig. 1 links von dem Hydraulikventil 8 abgehende Hydraulikleitung mit dem Druckanschluss einer nicht gezeigten Hydraulikpumpe verbunden sein und die in Fig. 1 rechts abgehende Hydraulikleitung mit einem Rücklaufanschluss. In diesem Falle fließt Hydraulikflüssigkeit in die Druckkammer 16 des linken Gleichlaufzylinders. Die aktive Kolbenstange 10 fährt daher aus. Hierbei verdrängt der Kolben Hydraulikflüssigkeit aus der Zugkammer 6 des linken Gleichlaufzylinders 3. Diese strömt in die Druckkammer 7 des rechten Gleichlaufzylinders 4. Daher fährt auch die aktive Kolbenstange 11 des rechten Gleichlaufzylinders 4 aus. Bei einer anderen Stellung des Hydraulikventils 8 fahren entsprechend beide aktiven Kolbenstangen 10, 11 ein. Da die Gleichlaufzylinder 3, 4 parallel zueinander angeordnet sind, und die aktiven Kolbenstangen 10, 11 in die gleiche Richtung weisen, ergeben sich also stets parallele Bewegungen der aktiven Kolbenstangen 10, 11. Beide Gleichlaufzylinder 3, 4, sind auf der gleichen Seite, in Fig. 1 oben, der Drehachse A, A' angeordnet. Da der Angriffspunkt P des in Fig. 1 linken Gleichlaufzylinders links von der Drehachse A versetzt angeordnet ist und der Angriffspunkt P' des in Fig. 1 rechten Gleichlaufzylinders 4 rechts von der zugehörigen Drehachse A' versetzt angeordnet ist, bewirken die parallelen, synchronen Bewegungen der aktiven Kolbenstangen gegenläufige Drehbewegungen der Räder 55, 56. Da die beiden Räder 55, 56, bzw. Radsätze 1, 2 hydraulisch miteinander gekoppelt sind, ist eine elektronische Kopplung nicht erforderlich und in dem in Fig. 1 gezeigten Ausführungsbeispiel nicht vorhanden.

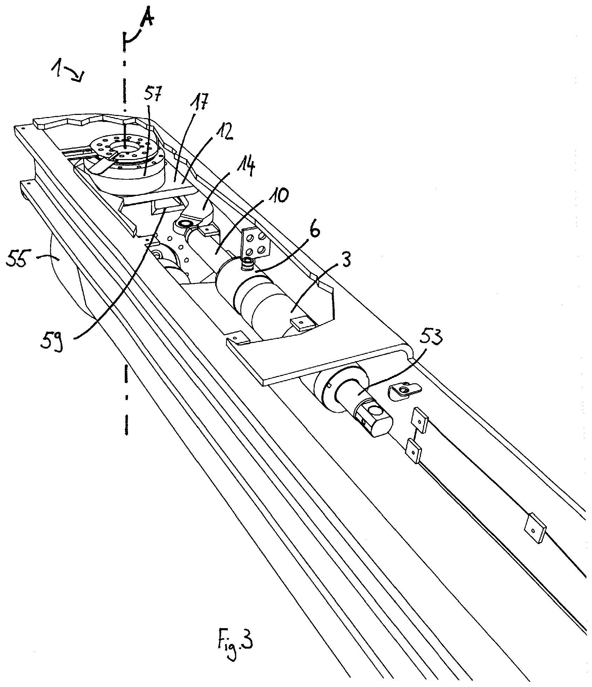

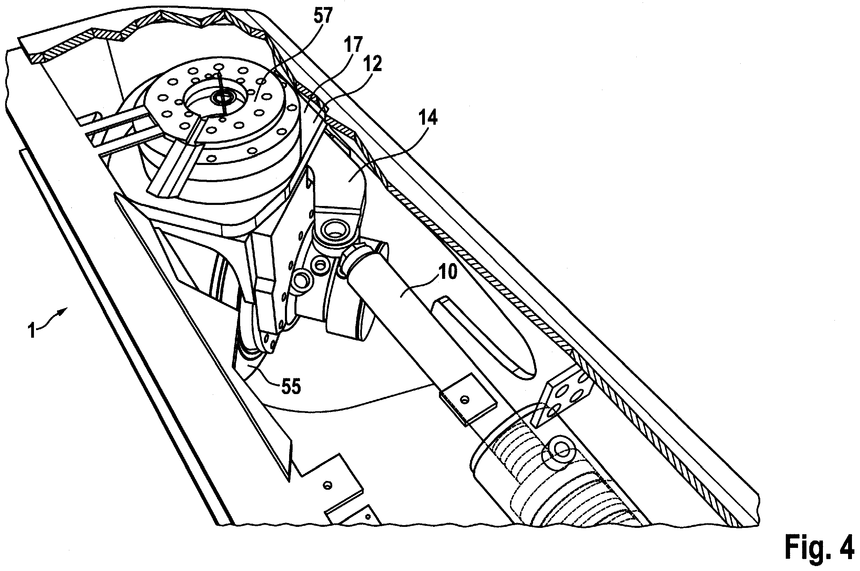

Wie insbesondere Fig. 3 für einen Radschemel 17 zeigt, weisen beide Radschemel eine Aussparung 59 auf. Wie Fig. 4 zeigt, tritt der Lenkhebel 14 in bestimmten Lenksituationen in diese Aussparung und ermöglicht daher diese Lenksituationen. Durch die Aussparungen wird also eine Vergrößerung des möglichen Lenkwinkels erreicht. Das Zusammenwirken der Krümmung des Lenkhebels und der Aussparung führt zu einem großen Lenkwinkel, ohne die Radschemel 17, 18 durch zu große Ausnehmungen zu sehr zu schwächen. Wie Fig. 2 zeigt, reicht der mögliche Lenkwinkel von einer ca. 50 Grad - Stellung eines Rades zur Richtung R der Längserstreckung des Segments (links oben) bis zu einer ca. 180 Grad - Stellung (rechts unten). Das Rad kann also um ca. 130 Grad verschwenkt werden.

Die Fig. 3 und 4 zeigen auch, dass der Lenkhebel 14 in vertikaler Richtung betrachtet zwischen dem Lenklager 57 und dem Rad 55 angeordnet ist. Dies führt zu einer sehr geringen Bauhöhe.

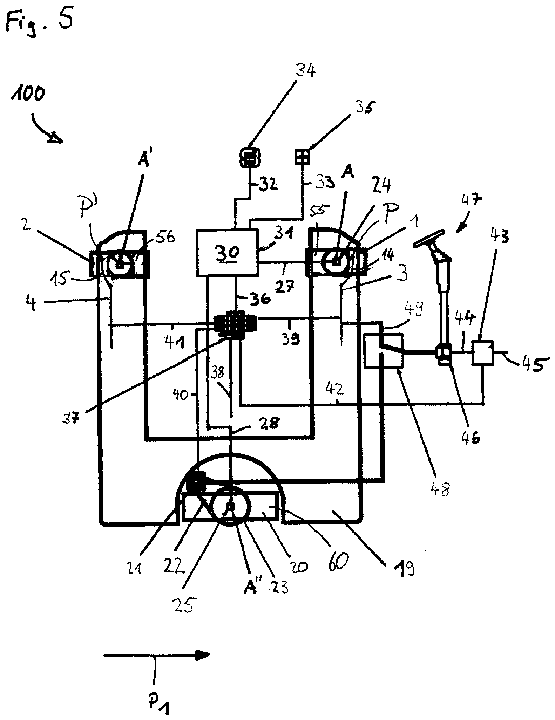

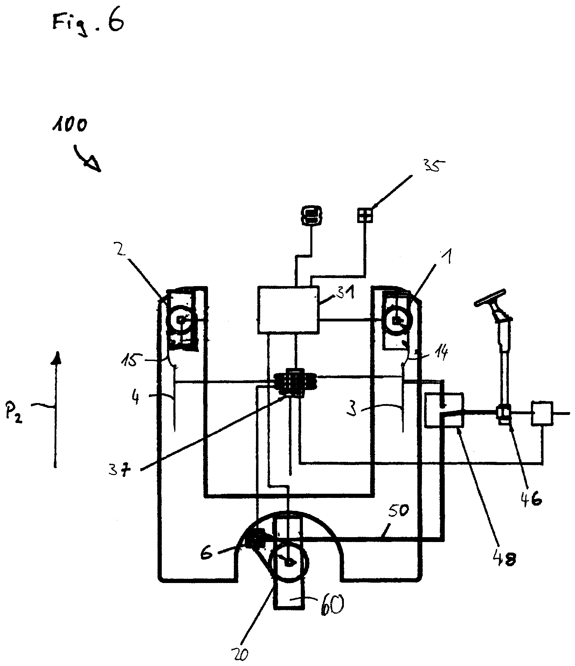

Die Fig. 5 und 6 zeigen ein zweites Ausführungsbeispiel. Anders als in Fig. 1 sind in den Fig. 5 und 6 Hydraulikleitungen lediglich schematisch dargestellt. Daher kann eine Linie in den Fig. 5 und 6 beispielsweise für zwei Hydraulikleitungen eines Kreislaufs stehen.

In den Fig. 5 und 6 ist schematisch das Fahrgestell 19 eines als Ganzes mit 100 bezeichneten Flurförderzeugs dargestellt. Sämtliche Radsätze 1, 2, 20 sind um senkrecht zur Zeichenebene verlaufende Achsen A, A', A" lenkbar angeordnet.

Zum Schwenken der Radsätze 1, 2, 20 sind jeweils einem der Radsätze zugeordnete Lenkmotoren 3, 4, 21 vorgesehen. Die Lenkmotoren 3, 4 sind als hydraulische Gleichlaufzylinder ausgestaltet und der Lenkmotor 21 ist im gezeigten Ausführungsbeispiel als hydraulischer Rotationsmotor mit einem flexiblen Zugelement 22 zur Bewegungsübertragung ausgestaltet. Es ist denkbar, dass auch der Lenkmotor 21 als Hydraulikzylinder, etwa Gleichlaufzylinder ausgestaltet ist, dessen Form und Größe den übrigen Lenkmotoren entspricht. Die in Fig. 5 und 6 oben dargestellten Radsätze 1, 2 werden im Folgenden als Lastradsätze bezeichnet, der untere Radsatz 20 mit dem Rad 60 als weiterer Radsatz.

An genau einem der Lastradsätze 1 und an dem weiteren Radsatz 20 ist ein beispielsweise elektrisch oder elektronisch arbeitender Lenkwinkelaufnehmer 24, 25 vorgesehen. Der Lenkwinkelaufnehmer 24 ist über eine Signalleitung 27, der Lenkwinkelaufnehmer 25 über eine Signalleitung 28 mit einer Lenksteuerungseinrichtung 30 verbunden, die als Lenkcomputer 31 mit einer Einrichtung zum Speichern mehrerer Lenkprogramme ausgebildet ist. Über weitere Signalleitungen 32, 33 ist der Lenkcomputer 31 mit Einrichtungen zur Lenkprogrammauswahl 34 sowie zur Fahrtrichtungsvorwahl 35 verbunden.

Ferner ist die Lenksteuerungseinrichtung 30 über eine Signalleitung 36 mit einem Lenkblock 37 verbunden. Bei diesem Lenkblock 37 handelt es sich um eine Mehrventilanordnung, die in Abhängigkeit der über die Signalleitung anliegenden Signale über eine Hydraulikleitung 38 von einer in der Zeichnung nicht dargestellten Hydraulikpumpe zugeführte Hydraulikflüssigkeit den Lenkmotoren 3, 4, 21 über Hydraulikleitungen 39, 40, 41 zuführt. Die Lenkmotoren 3, 4 der Lasträder sind allerdings, wie bei dem in Fig. 1 gezeigten Ausführungsbeispiel direkt miteinander verbunden, so dass die Zuführung der Hydraulikflüssigkeiten hinsichtlich der Lenkmotoren 3 und 4 nicht individuell erfolgt, sondern voneinander abhängt, abgesehen von einer kleinen Menge Öl, welche über ein Ausgleichsventil im Kolben eventuelle Leckagen kompensiert.

Ferner ist der Lenkblock 37 über eine Hydraulikleitung 42 mit einem Prioritätsventil 43 verbunden. Über die Hydraulikleitung 42 wird dem Prioritätsventil 43 nicht zur Betätigung der Lenkmotoren 3, 4, 21 benötigte Hydraulikflüssigkeit zugeführt. Von diesen wird - sofern zur Lenkbetätigung zur Unterstützung benötigt - Hydraulikflüssigkeit über eine Hydraulikleitung 44 einem Lenkorbitrol 46 zugeleitet, andernfalls über eine Hydraulikleitung 45 einem in der Zeichnung nicht dargestellten Arbeitssteuerblock zur Beaufschlagung weiterer hydraulisch betätigter Komponenten des Flurförderzeugs,

Der Betätigung des Lenkorbitrols 46 dient ein mechanisch mit ihm verbundener Lenkgeber 47 in Form eines Lenkrades.

Bei dem in Fig. 5 dargestellten Lenksystemzustand, bei welchem sich das Fahrzeug in durch den Pfeil P1 symbolisierter Längsfahrtrichtung befindet, ist das Lenkorbitrol 46 mit Hilfe eines Umschaltventils 48 über eine Hydraulikleitung 49 direkt mit dem ersten Lenkmotor 3 eines der Lastradsätze 1 verbunden. Von diesem während des Fahrbetriebs erzeugte Widerstände werden auf den Lenkgeber 47 übertragen und so als Fahrgefühl spürbar. Der jeweilige Lenkwinkel des ersten Lastradsatzes 1 kann über den ersten Lenkwinkelaufnehmer 24 und die Signalleitung 27 der Lenksteuerungseinrichtung zugeführt werden. Ein Lenkwinkelaufnehmer für den zweiten Lastradsatz 2 ist nicht erforderlich, da dessen Lenkwinkel über die hydraulische Kopplung mit dem ersten Lastradsatz feststeht. Auch eine Signalleitung zwischen der Lenksteuerungseinrichtung und diesem Radsatz ist daher entbehrlich.

Bei dem in den Fig. 5 und 6 gezeigten Ausführungsbeispiel des Flurförderzeugs 100 wird mittels eines Lenkgebers 47 in Form eines Lenkrades mindestens ein lenkbares Rad durch eine hydraulische Verbindung mit dem Lenkgeber manuell gelenkt. In der in Fig. 5 gezeigten Längsfahrt wird einer der Lastradsätze 1 durch eine hydraulische Verbindung mit dem Lenkgeber manuell gelenkt. Aufgrund der hydraulischen Kopplung erfolgt hierbei gleichzeitig eine Lenkung des zweiten Lastradsatzes 2. In der in Fig. 6 gezeigten Querfahrt wird der weitere Radsatz 20 durch eine hydraulische Verbindung mit dem Lenkgeber manuell gelenkt.

Wird nun über die Einrichtung 35 zur Fahrtrichtungsvorwahl von der in Fig. 5 dargestellten Längsfahrt auf die in Fig. 6 dargestellte und durch den Pfeil P2 symboli-sierte Querfahrt umgeschaltet, so steuert der Lenkcomputer 31 den Lenkblock 37 derart an, dass zunächst über die Hydraulikleitungen 39, 40, 41 sämtliche Radsätze 1, 2, 20 um 90° verschwenkt werden. Gleichzeitig wird das Umschaltventil 48 auf die zum Lenkmotor 21 des weiteren Radsatzes 20 führende Hydraulikleitung 50 umgeschaltet, so dass das Lenkorbitrol 46 nun direkt mit dem Lenkmotor 21 des weiteren Radsatzes 20 verbunden und Lenkwiderstände dieses Radsatzes im Lenkgeber 47 spürbar werden. Im Gegensatz zum weiteren Radsatz 20, welcher nun manuell gelenkt wird, verbleiben die Lastradsätze 1 und 2 nun starr.

Der weitere Radsatz 20 wird in der in Fig. 5 gezeigten Längsfahrt nicht gelenkt. Der Radsatz 20 wird in diesem Ausführungsbeispiel also ausschließlich in Querfahrt und dann direkt hydraulisch betätigt.

Alle Radsätze werden in dem in den Fig. 5 und 6 gezeigten Ausführungsbeispiel bevorzugt entweder durch eine hydraulische Verbindung mit dem Lenkgeber manuell gelenkt oder sie sind starr. Bei einem Umschalten des Umschaltventils 48 werden die zuvor manuell gelenkten Radsätze mit Hilfe der Lenkungsvorrichtung 30 in eine bestimmte Lenk-Position gebracht und sind dann bis zu einem erneuten Umschalten des Umschaltventils 48 starr. Und die zuvor starren Radsätze werden manuell gelenkt.

### Bezugszeichenliste:

- 100: Flurförderzeugs
- 1,2: Radsätze
- 3, 4: hydraulischer Linearmotor, Gleichlaufzylinder
- 5: Hydraulikkreislauf
- 6: Zugkammer
- 7: Druckkammer
- 8: Hydraulikventil
- 9: Zugkammer
- 10, 11: aktive Kolbenstange
- 12, 13: drehbar gelagerte Vorrichtung
- 14,15: Lenkhebel
- 16: Druckkammer
- 17, 18: Radschemel
- 19: Fahrgestell
- 20: weiterer Radsatz
- 21: weiterer Hydrauliklenkmotor
- 22: flexibles Zugelement
- 23: Lenkbetätigungsrad
- 24,25: Lenkwinkelaufnehmer
- 26: -
- 27,28: Signalleitungen
- 29: -
- 30: Lenkungssteuerungseinrichtung
- 31: Lenkcomputer
- 32,33: Signalleitung
- 34: Einrichtung zur Lenkprogrammauswahl
- 35: Einrichtung zur Fahrtrichtungsvorwahl
- 36: Signalleitung
- 37: Lenkblock
- 38, 39, 40, 41, 42: Hydraulikleitungen
- 43: Prioritätsventil
- 44,45: Hydraulikleitung
- 46: Lenkorbitrol
- 47: Lenkgeber
- 48: Umschaltventil
- 49,50: Hydraulikleitung
- 51, 52: Segmente des Fahrgestells
- 53, 54: passive Kolbenstangen
- 55,56: Rad
- 57,58: Lenklager
- 59: Aussparung
- 60: Rad

- A, A', A": Achsen
- P, P': Punkt
- P1, P2: Pfeil
- R: Richtung der Längserstreckung der Segmente

## Patentansprüche

1. Lenksystem für ein Flurförderzeug (100), bei dem mindestens zwei hydraulisch lenkbare Radsätze (1, 2) vorgesehen sind,
wobei die Radsätze (1, 2) jeweils mittels eines hydraulischen Linearmotors (3, 4) lenkbar sind, der als Gleichlaufzylinder ausgebildet ist und die mindestens zwei Gleichlaufzylinder (3, 4) miteinander wirkverbunden sind,
wobei jeder der mindestens zwei Gleichlaufzylinder (3, 4) einen Kolben und genau eine aktive Kolbenstange (10, 11) aufweist, die der Übertragung der translatorischen Bewegung des Kolbens dient und eine zur Erzielung des Gleichlaufs vorgesehene weitere Kolbenstange, die mit ihrem freien Ende nicht angeschlossen ist und daher nicht der Übertragung einer translatorischen Bewegung dient,
wobei die mindestens zwei hydraulisch lenkbare Radsätze (1, 2) zur Erzielung der Lenkbarkeit jeweils eine drehbar gelagerte Vorrichtung (12, 13) umfassen und die aktive Kolbenstange (10, 11) der Gleichlaufzylinder (3, 4) jeweils über einen Lenkhebel (14, 15) auf die zugehörige drehbar gelagerte Vorrichtung (12, 13) des Radsatzes (1, 2) wirkt,
wobei der Lenkhebel (14, 15) jeweils drehbar an der zugehörigen aktiven Kolbenstange (10, 11) und drehbar an der zugehörigen drehbar gelagerten Vorrichtung (12, 13) angeordnet ist,
wobei der Gleichlaufzylinder (3, 4) ortsfest zum Fahrgestell des Flurförderzeugs angeordnet ist.

2. Lenksystem nach Anspruch 1, **dadurch gekennzeichnet, dass** die mindestens zwei Gleichlaufzylinder (3, 4) in einem gemeinsamen geschlossenen Hydraulikkreislauf (5) angeordnet sind und dass die Zugkammer (6) eines Gleichlaufzylinders (3) mit der Druckkammer (7) eines anderen Gleichlaufzylinders (4) verbunden ist und die Druckkammer (16) des Gleichlaufzylinders (3), dessen Zugkammer (6) mit der Druckkammer (7) eines anderen Gleichlaufzylinders (4) verbunden ist, mit einem Hydraulikventil (8) verbunden ist und die Zugkammer (9) des Zylinders (4) dessen Druckkammer (7) mit der Zugkammer (6) eines anderen Zylinders (3) verbunden ist, ebenfalls mit dem Hydraulikventil (8) verbunden ist.

3. Lenksystem nach Ansprüche 1 oder 2, **dadurch gekennzeichnet, dass** die mindestens zwei hydraulisch lenkbare Radsätze (1, 2) zur Erzielung der Lenkbarkeit jeweils eine drehbar gelagerte Vorrichtung (12, 13) umfassen und die aktive Kolbenstange (10) des einen Gleichlaufzylinders (3) an einem Punkt (P) an der drehbar gelagerten Vorrichtung (12) des Radsatzes (1) wirkt, der zu einer anderen Seite von der Drehachse (A) der drehbar gelagerten Vorrichtung (12) versetzt ist, als der entsprechende Punkt (P') der aktiven Kolbenstange (11) des mindestens einen anderen Gleichlaufzylinders (4) bezüglich der Drehachse (A') der dortigen drehbar gelagerten Vorrichtung (13).

4. Lenksystem nach einem der Ansprüche 1 bis 3, **dadurch gekennzeichnet, dass** der Lenkhebel (14, 15) gekrümmt ist.

5. Lenksystem nach einem der Ansprüche 1 bis 4, **dadurch gekennzeichnet, dass** die drehbar gelagerten Vorrichtungen (12, 13) jeweils eine Aussparung (59) aufweisen, in die die Lenkhebel (14, 15) nur in bestimmten Lenksituationen treten.

6. Lenksystem nach einem der Ansprüche 1 bis 5, **dadurch gekennzeichnet, dass** keine elektronische Kopplung zwischen den drehbar gelagerten Vorrichtungen (12, 13) der Radsätze (1, 2) besteht.

7. Flurförderzeug (100) mit einem Lenksystem nach einem der Ansprüche 1 bis 6.

## Claims

1. A steering system for an industrial truck (100), in which at least two hydraulically steerable wheel sets (1, 2) are provided,
wherein the wheel sets (1, 2) are each steerable by means of a respective hydraulic linear motor (3, 4) designed as a synchronizing cylinder, and the at least two synchronizing cylinders (3, 4) are operatively connected to one another, wherein each of the at least two synchronizing cylinders (3, 4) has a piston and precisely one active piston rod (10, 11), which serves for transmitting the translational motion of the piston, and a further piston rod which is provided in order to achieve the synchronization, is not connected by its free end and therefore does not serve for transmitting a translational motion,
wherein the at least two hydraulically steerable wheel sets (1, 2) each comprise a rotatably mounted device (12, 13) in order to achieve the steerability, and the active piston rod (10, 11) of the synchronizing cylinders (3, 4) in each case acts on the associated rotatably mounted device (12, 13) of the wheel set (1, 2) via a steering lever (14, 15),
whereas the steering lever (14, 15) is in each case rotatably mounted on the associated active piston rod (10, 11) and is rotatably disposed on the associated rotatably mounted device (12, 13),
wherein the synchronizing cylinder (3, 4) is arranged in a stationary manner with respect to the chassis of the industrial truck.

2. Steering system according to claim 1, **characterized in that** the at least two synchronizing cylinders (3, 4) are disposed in a common closed hydraulic circuit (5) and that the traction chamber (6) of a synchronizing cylinder (3) is connected to the pressure chamber (7) of another synchronizing cylinder (4) and the pressure chamber (16) of the synchronizing cylinder (3), of which the traction chamber (6) is connected to the pressure chamber (7) of another synchronizing cylinder (4), is connected to a hydraulic valve (8) and the traction chamber (9) of the cylinder (4), of which the pressure chamber (7)
is connected to the traction chamber (6) of another cylinder (3), is likewise connected to the hydraulic valve (8).

3. Steering system according to claims 1 or 2, **characterized in that** the at least two hydraulically steerable wheel sets (1, 2) each comprise a rotatably mounted device (12, 13) in order to achieve the steerability, and the active piston rod (10) of one synchronizing cylinder (3) acts on a point (P) on the rotatably mounted device (12) of the wheel set (1), which is offset with respect to another side of the axis of rotation (A) of the rotatably mounted device (12) than the corresponding point (P') of the active piston rod (11) of the at least one other synchronizing cylinder (4) with respect to the axis of rotation (A') of the device (13) rotatably mounted there.

4. Steering system according to one of claims 1 or 3, **characterized in that** the steering lever (14, 15) is curved.

5. Steering system according to one of claims 1 to 4, **characterized in that** the rotatably mounted devices (12, 13) preferably each have an opening (59) into which the steering levers (14, 15) enter only in specific steering situations.

6. Steering system according to one of claims 1 to 5, **characterized in that** there is no electronic coupling between the rotatably mounted devices (12, 13) of the wheel sets (1,2).

7. Industrial truck (100) with a steering system according to one of claims 1 to 6.

## Revendications

1. Système de direction, destiné à un chariot de manutention (100), dans lequel il est prévu au moins deux ensembles de roues orientables hydrauliquement (1, 2),
les ensembles de roues (1, 2) étant chacun orientables au moyen d'un moteur linéaire hydraulique (3, 4) qui est conçu comme un cylindre synchrone et les au moins deux cylindres synchrones (3, 4) étant reliés fonctionnellement entre eux,
chacun des au moins deux cylindres synchrones (3, 4) comprenant un piston et précisément une tige de piston active (10, 11), qui sert à transmettre le mouvement de translation du piston, et une autre tige de piston qui est destinée à réaliser le synchronisme, qui n'est pas reliée à son extrémité libre et par conséquent qui ne sert pas à transmettre un mouvement de translation,
les au moins deux ensembles de roues orientables hydrauliquement (1, 2) comprenant chacun un dispositif (12, 13) monté à rotation pour pouvoir les orienter et la tige de piston active (10, 11) du cylindre synchrone (3, 4) agissant sur le dispositif associé (12, 13), monté à rotation, de chaque ensemble de roues (1, 2) par le biais d'un levier de direction (14, 15),
le levier de direction (14, 15), monté à rotation, étant disposé sur la tige de piston active associée (10, 11) et étant disposé à rotation sur le dispositif associé (12, 13) monté à rotation,
le cylindre synchrone (3, 4) étant disposé de manière fixe par rapport au mécanisme de roulement du chariot de manutention.

2. Système de direction selon la revendication 1, **caractérisé en ce que** les au moins deux cylindres synchrones (3, 4) sont disposés dans un circuit hydraulique fermé commun (5) et **en ce que** la chambre de traction (6) d'un cylindre synchrone (3) est reliée à la chambre sous pression (7) d'un autre cylindre synchrone (4) et la chambre sous pression (16) du cylindre synchrone (3), dont la chambre de traction (6) est reliée à la chambre sous pression (7) d'un autre cylindre synchrone (4), est reliée à une soupape hydraulique (8) et la chambre de traction (9) du cylindre (4), dont la chambre sous pression (7) est reliée à la chambre de traction (6) d'un autre cylindre (3), est également reliée à la soupape hydraulique (8).

3. Système de direction selon la revendication 1 ou 2, **caractérisé en ce que** les au moins deux ensembles de roues orientables hydrauliquement (1, 2) comprennent chacun un dispositif (12, 13), monté à rotation, pour pouvoir les orienter et la tige de piston active (10) d'un cylindre synchrone (3) agit au niveau du dispositif (12), monté à rotation, de l'ensemble de roues (1) en un point (P) qui est décalé de l'axe de rotation (A) du dispositif (12), monté à rotation, sur un autre côté en comparaison avec le point correspondant (P') de la tige de piston active (11) de l'au moins un autre cylindre synchrone (4) par rapport à l'axe de rotation (A') du dispositif (13) monté à rotation à cet endroit.

4. Système de direction selon l'une des revendications 1 à 3, **caractérisé en ce que** le levier de direction (14, 15) est incurvé.

5. Système de direction selon l'une des revendications 1 à 4, **caractérisé en ce que** les dispositifs (12, 13), montés à rotation, comportent chacun un évidement (59) dans lequel le levier de direction (14, 15) ne s'engage que dans certaines situations de direction.

6. Système de direction selon l'une des revendications 1 à 5, **caractérisé en ce qu'**il n'y a aucun couplage électronique entre les dispositifs (12, 13), montés à rotation, des ensembles de roues (1,2).

7. Chariot de manutention (100) comprenant un système de direction selon l'une des revendications 1 à 6.
